(19) Europäisches Patentamt / European Patent Office / Office européen des brevets

(11) **EP 3 084 118 B1**

(12) **FASCICULE DE BREVET EUROPEEN**

(45) Date de publication et mention
de la délivrance du brevet:
**01.08.2018 Bulletin 2018/31**

(51) Int Cl.:
**E21B 34/14** *(2006.01)*     **E21B 43/20** *(2006.01)*
**F16K 47/08** *(2006.01)*

(21) Numéro de dépôt: **14830846.3**

(22) Date de dépôt: **19.12.2014**

(86) Numéro de dépôt international:
**PCT/FR2014/053483**

(87) Numéro de publication internationale:
**WO 2015/092334 (25.06.2015 Gazette 2015/25)**

(54) **VANNE DE CONTRÔLE DE DÉBIT COMPRENANT UNE PLURALITÉ DE TUBES À SECTION GÉOMÉTRIQUEMENT VARIABLE**

DURCHFLUSSREGELVENTIL MIT MEHREREN ROHREN MIT GEOMETRISCH VARIABLEM QUERSCHNITT

FLOW CONTROL VALVE INCLUDING A PLURALITY OF TUBES HAVING A GEOMETRICALLY VARIABLE CROSS-SECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2013 EP 13306796**

(43) Date de publication de la demande:
**26.10.2016 Bulletin 2016/43**

(73) Titulaire: **Total SA**
**92400 Courbevoie (FR)**

(72) Inventeurs:
• **JOUENNE, Stéphane**
  **F-64320 Bizanos (FR)**
• **HEURTEUX, Guillaume**
  **F-64160 Morlaas (FR)**

(74) Mandataire: **Cabinet Plasseraud**
**66, rue de la Chaussée d'Antin**
**75440 Paris Cedex 09 (FR)**

(56) Documents cités:
WO-A2-2012/001671     DE-A1- 2 810 118
US-A- 3 447 566       US-A- 4 007 908
US-A- 5 307 830       US-A1- 2011 042 592

EP 3 084 118 B1

## Description

### Domaine de l'invention

La présente invention concerne une vanne de contrôle de débit spécialement adaptée au transport de solutions de polymères qui permet de minimiser la dégradation mécanique de ladite solution de polymère lors de son passage dans ladite vanne.

### Arrière-plan technique

Une vanne de contrôle de débit est un dispositif mécanique servant à contrôler le débit d'un fluide passant dans une conduite. On peut ainsi s'en servir pour diminuer ou bien pour augmenter le débit du fluide.

Une vanne de contrôle de débit permet de réguler un débit de fluide en créant de la perte de charge. Cette perte de charge est variable en fonction de son ouverture. Lorsqu'une solution de polymère passe à travers une vanne de contrôle de débit, on observe une baisse importante de la viscosité. On parle alors de dégradation mécanique de la solution de polymère.

Dans le cadre de la Récupération Assistée du Pétrole (EOR - Enhanced Oil Recovery), on cherche à développer un nouveau modèle de vanne de contrôle de débit pour limiter la dégradation mécanique des solutions visqueuses de polymère (Polyacrylamide, HPAM...).

Cette invention s'applique à tous les projets comprenant une injection d'un polymère sensible à la dégradation mécanique (« polymer et surfactant flooding ») et des vannes de contrôle de débit en tête de puits. C'est en particulier le cas des champs développés en offshore ou pour lesquels le fluide est transporté sur de longues distances. En effet, ce type de développement comprend une ligne d'injection qui alimente plusieurs puits comprenant chacun une vanne de contrôle de débit en tête de puits.

A titre d'exemple, un champ de pétrole peut comprendre plusieurs complexes. En général, une ligne d'injection unique permet de distribuer l'eau à injecter sur chacun des puits d'un complexe. La pression de tête et la résistance hydrodynamique de chacun des puits étant variables, il est nécessaire d'employer une vanne de contrôle de débit en tête de chaque puits afin de contrôler le débit injecté.

En effet, la pression de tête étant égale à la pression au départ de la ligne d'injection moins les pertes de charge entre le départ de la ligne d'injection et la tête de puits, la pression de tête de chacun des puits est d'autant plus grande que le puits est proche du départ de la ligne d'injection. Concernant la résistance hydrodynamique, elle dépend de nombreux facteurs tels que la longueur du drain d'injection, la perméabilité de la formation, la porosité, la saturation en huile. Par exemple, un puits A qui injecte dans une zone peu perméable aura une injectivité beaucoup moins bonne qu'un autre puits B de la même ligne injectant dans une zone perméable. En d'autres termes, pour une pression de tête identique, le débit injecté dans le puits A sera plus faible que celui injecté dans le puits B. Si l'on veut augmenter le ratio de débit entre les puits A et B, il faut diminuer la pression de tête du puits B. Pour ce faire, on placera une vanne en tête du puits B qui créera la perte de charge souhaitée.

Pour un débit Q donné (en $m^3/h$) et une ouverture de vanne donnée Op (en %), la vanne va créer une perte de charge $\Delta P$ (en bar). Si le débit augmente ou bien l'ouverture de vanne diminue, la perte de charge augmente. Pour chaque ouverture de vanne, le constructeur de vanne fournit un coefficient de débit Cv définit de la manière suivante :

$$Cv = f(Op)\frac{Q}{\sqrt{\Delta P / G}}$$

où G est la constante gravitationnelle (en $m/s^2$).

Ainsi, quand on fixe deux variables, la troisième est connue. La courbe Cv est déterminée expérimentalement par le constructeur. Elle dépend de la géométrie de la vanne.

Dans le cadre de la Récupération Assistée du Pétrole, on utilise une solution de polymère afin d'accélérer la récupération de l'huile, et augmenter cette récupération quand la production sera stoppée. En effet, la dissolution du polymère dans l'eau injectée améliore le contrôle de mobilité c'est-à-dire qu'en augmentant la viscosité de l'eau, on diminue la mobilité de l'eau, ce qui est favorable à une meilleure récupération de l'huile. Donc, l'objectif principal est de maintenir la viscosité de la solution de polymère injectée. Cependant, cette solution de polymère est très sensible au cisaillement. En effet, lors de son passage dans la vanne, les chaînes de polymère peuvent se casser, ce qui entraîne une diminution de la viscosité de la solution de polymère.

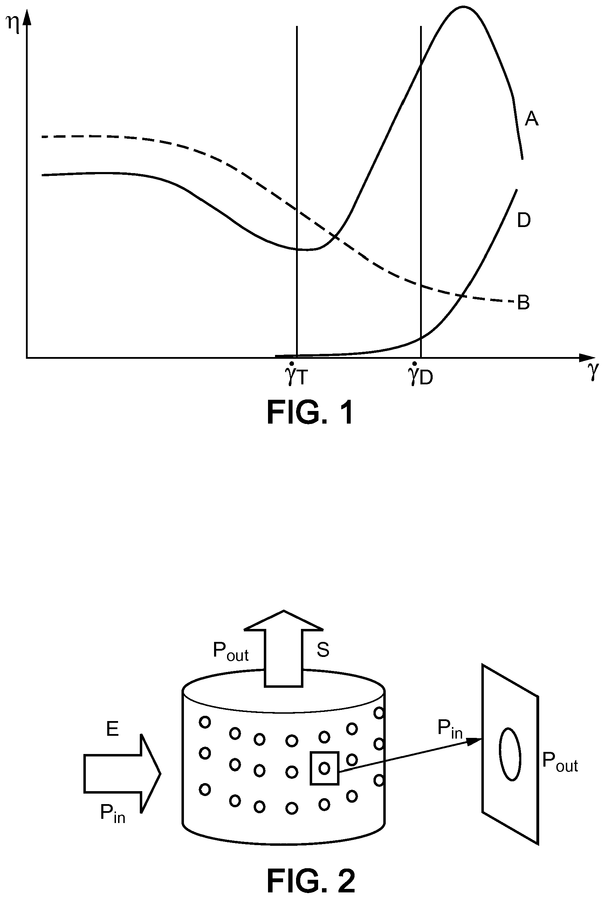

Le comportement rhéologique d'une solution de polymère en milieu poreux diffère du comportement en volume (mesure de viscosité en rhéomètre). La Figure 1 illustre ce comportement. A bas cisaillement, la viscosité apparente du polymère en milieu poreux (représentée par la courbe A) est plus faible que la viscosité en volume (représentée par la courbe B). A bas gradient, on a un plateau newtonien puis une zone rhéofluidifiante (baisse de la viscosité avec le cisaillement). A partir d'un cisaillement critique $\dot{\gamma}_T$, on observe un comportement rhéoépaississant (augmentation de la viscosité avec le cisaillement) qui va passer par un maximum puis rejoindre la viscosité de l'eau à très haut gradient. Le rhéoépaississement est lié au caractère élastique des chaînes de polymère.

La physique des solutions diluées de polymère est assez bien décrite. Pour un taux d'élongation critique $\dot{\varepsilon}_T$ tel que $\dot{\varepsilon}_T \tau > 1$ où $\tau$ est le temps de relaxation de la chaîne de polymère, les chaînes de polymère subissent une transition d'un état "pelote" à un état "étiré" qui se manifeste par l'apparition d'une viscosité élongationnelle beaucoup plus élevée que la viscosité en volume mesurée en cisaillement simple. La force hydrodynamique exercée par le solvant sur la chaîne de polymère dans un état "étiré" s'exprime par $F \propto \eta_S \dot{\varepsilon} L^2$. Lorsque cette force est supérieure à la force de la liaison carbone-carbone de la chaîne, la chaîne de polymère casse préférentiellement à son centre. Une diminution de la masse moléculaire des chaînes se traduit par une baisse de viscosité de la solution. C'est ce qu'on appelle la dégradation mécanique (représentée par la courbe D), elle intervient à un taux d'élongation critique $\dot{\varepsilon}_D$. Il existe donc un domaine de cisaillement dans le milieu poreux $[\dot{\gamma}_T - \dot{\gamma}_D]$ correspondant au domaine de cisaillement élongationnel $[\dot{\varepsilon}_T - \dot{\varepsilon}_D]$ pour lequel le polymère développe une viscosité élongationnelle sans pour autant subir de dégradation significative.

Les vannes de contrôle de débit s actuelles sont généralement constituées d'une cage percée de trous de diamètre variable (Figure 2). L'entrée du fluide (E) se fait à travers les trous de la cage et la sortie (P), perpendiculaire, se trouve au centre de la cage. La surface accessible, donc le nombre de trous par lesquels passe le fluide, est ajustée par la hauteur d'un piston mobile ayant un mouvement parallèle à l'axe de la cage. Pour un débit donné, la perte de charge augmente lorsque la surface accessible à l'entrée du fluide diminue.

L'origine de la dégradation mécanique des solutions de polymère lors de leur passage dans une vanne de contrôle de débit est partiellement connue. Les chaînes de polymère en solution sont des pelotes flexibles qui s'allongent lorsqu'elles sont soumises à un cisaillement élongationnel. Lorsque les forces hydrodynamiques liées à ce champ de vitesses élongationnelles sont grandes, les chaînes de polymère se cassent.

Les vannes de contrôle de débit s actuelles génèrent de la perte de charge par passage du fluide dans des trous. Ce type de géométrie crée un cisaillement élongationnel fort dû au rapport de contraction élevé entre l'entrée de la vanne de contrôle de débit et les trous, ce qui engendre une forte diminution de la viscosité de la solution de polymère. On parle alors de dégradation de la solution de polymère. La viscosité de la solution de polymère étant un paramètre clé de l'EOR, il est donc nécessaire de limiter la dégradation de la solution de polymère injectée lors de son passage à travers la vanne de contrôle de débit.

Différentes solutions de vannes de contrôle de débit ont été décrites afin limiter la dégradation de la solution de polymère.

Par exemple US 4 276 904 décrit une vanne de contrôle de débit permettant de modifier un débit de fluide en faisant passer le fluide dans un nombre limité de tubes de longueurs comprises entre 3,048 m (10 ft) et 60,96 m (200 ft) et de différents diamètres compris entre 0,635 cm (0,25") et 2,540 cm (1"). Cette vanne de contrôle de débit est difficile à mettre en oeuvre (elle comprend notamment un grand nombre d'obturateurs, qu'il faut actionner indépendamment, à la sortie de chacun des tubes et est volumineuse DE 28 10 118 décrit une vanne de contrôle de débit comprenant une pluralité de tubes de transport de fluide à section géométriquement variable, disposés en parallèle les uns par rapport aux autres. WO 2012/001671 A2 décrit également une vanne de contrôle de débit constituée d'un système de capillaire de diamètre constant compris entre 0,125 mm et 11 mm, notamment adaptée à la mise en oeuvre d'un procédé d'injection d'un fluide dans une formation souterraine. Dans ce type d'écoulement, la particule de polymère est animée d'un mouvement de rotation rapide $(\omega = \dot{\gamma}_C / 2)$ soumettant la particule à des élongations et compressions successives qui ne donnent pas le temps à la particule de s'allonger. Par contre, dans un écoulement élongationnel comme dans un conduit qui comporte une forte contraction, la particule peut avoir le temps de s'allonger de façon importante et de ce fait, subir une forte élongation (proportionnelle à la viscosité du liquide de suspension, au gradient de vitesse d'élongation $\dot{\gamma}_E$ et au carré de la longueur atteinte L: $F_{e1} \sim \mu\, \dot{\gamma}_E L^2$). Si cette force devient plus grande que sa résistance interne, alors la particule se rompt et perd ses propriétés. On parle dans ce cas de dégradation mécanique. Toutefois, cette vanne ne permet pas de réduire la dégradation de la solution de polymère à des pourcentages inférieurs à 10% tout en ayant une taille adaptée à une utilisation dans le domaine pétrolier, en particulier sur une plateforme ou sur un gisement pétrolier terrestre. Il est donc souhaitable de développer une vanne de contrôle de débit qui limite la dégradation de la solution de polymère, qui soit compacte et facile à mettre en oeuvre.

La Demanderesse a mis au point une vanne de contrôle de débit par perte de charge qui répond à ces besoins. Ladite vanne comprend une pluralité de tubes de transport de fluide à section géométriquement variable, disposés en parallèle les uns par rapport aux autres, et un moyen de raccordement à la conduite, situé à une extrémité desdits tubes de transport de fluide. Cette structure est telle que :

1) l'écoulement est très peu élongationnel, donc très peu dégradant pour une solution de polymère peu stable mécaniquement

2) la perte de charge utile au contrôle du débit injecté s'effectue en maximisant la dissipation visqueuse avec les parois des tubes et en développant la viscosité élongationnelle de la solution de polymère,

3) la perte de charge peut être réglée de façon pratiquement continue et à volonté grâce à l'existence d'un grand nombre de tubes disposés en faisceau qui peuvent être ouverts à l'écoulement à volonté,

4) les dimensions de la vanne sont faibles et bien adaptées pour se brancher sur la conduite qui délivre le fluide d'injection dans le puits,

5) le système de fermeture/ouverture de la vanne est robuste, et

6) La perte de charge ayant lieu sur une grande longueur de tube plutôt qu'au passage d'un orifice, la vitesse du fluide au passage de la vanne est réduite. On s'attend à une attrition beaucoup moins grande et donc une meilleure longévité.

D'un point de vue technique, la vanne selon l'invention permet de réduire l'encombrement de par sa compacité et est facile à poser.

D'un point de vue économique, la vanne selon l'invention permet de faire une grande économie à la fois des OPEX (moindre quantité de polymères à utiliser) et de CAPEX (diminution de la dimension des installations de surface pour l'injection de polymère).

## Résumé

L'invention a pour objet une vanne de contrôle de débit (1) destinée à être raccordée à une conduite (2), ladite vanne comprenant :

- une pluralité de tubes de transport de fluide (3) à section géométriquement variable, disposés en parallèle les uns par rapport aux autres et présentant une alternance de sections de petit diamètre et de grand diamètre, le ratio d'une section de grand diamètre sur une section de petit diamètre étant de 2 à 10;
- un moyen de raccordement (4) à la conduite, situé à une extrémité des tubes de transport de fluide (3).

La section géométriquement variable des tubes de transport de fluide (3) permet de limiter la perte de viscosité du fluide transporté.

Des caractéristiques optionnelles et non limitatives de la vanne de contrôle de débit (1) sont les suivantes.

Selon un mode de réalisation, la vanne de contrôle de débit (1) est caractérisée en ce que la distance entre deux sections de petit(s) diamètre(s) est comprise dans la gamme allant de 0,5 mm à 20 mm.

Selon un mode de réalisation, la vanne de contrôle de débit (1) est caractérisée en ce que la distance entre deux sections de grand(s) diamètre(s) est comprise dans la gamme allant de 0.5 mm à 20 mm.

Selon un mode de réalisation, la vanne de contrôle de débit (1) est caractérisée en ce qu'une section de petit diamètre a un diamètre supérieur ou égal à 0,5 mm.

Selon un mode de réalisation, la vanne de contrôle de débit (1) est caractérisée en ce qu'une section de grand diamètre a un diamètre inférieur ou égal à 5 mm.

Selon un mode de réalisation, la vanne de contrôle de débit (1) est caractérisée en ce que la variation d'une section de petit diamètre vers une section de grand diamètre se présente sous forme de créneau ou bien sous forme exponentielle, logarithmique ou hyperbolique.

Selon un mode de réalisation, la vanne de contrôle de débit (1) est caractérisée en ce que la variation d'une section de grand diamètre vers une section de petit diamètre se présente sous forme de créneau ou bien sous forme exponentielle, logarithmique ou hyperbolique.

Selon un mode de réalisation, la vanne de contrôle de débit (1) est caractérisée en ce qu'elle comprend des moyens d'obturation (5) d'au moins une partie des tubes de transport de fluide (3).

Selon un mode de réalisation, la vanne de contrôle de débit (1) est caractérisée en ce que les moyens d'obturation (5) permettent l'obturation sélective de tout ou partie des tubes de transport de fluide (3).

Selon un mode de réalisation, la vanne de contrôle de débit (1) est caractérisée en ce que les moyens d'obturation (5) comprennent un diaphragme, des ailettes, une vanne à boisseau ou un piston.

Selon un mode de réalisation, la vanne de contrôle de débit (1) est caractérisée en ce que les tubes de transport de fluide (3) ne présentent pas tous des sections identiques.

Selon un mode de réalisation, la vanne de contrôle de débit (1) est caractérisée en ce que les tubes de transport de fluide (3) sont disposés par groupes de section essentiellement identique.

Selon un mode de réalisation, la vanne de contrôle de débit (1) est caractérisée en ce que les différents groupes de tubes de transport de fluide (3) sont répartis selon des cercles concentriques, chaque cercle comportant des tubes de section identique, les sections des tubes croissant de l'intérieur vers l'extérieur de la vanne.

Selon un mode de réalisation, la vanne de contrôle de débit (1) est caractérisée en ce que les différents groupes de tubes de transport de fluide (3) sont répartis selon des lignes parallèles, chaque ligne comportant des tubes de section identique, les lignes étant disposées selon un ordre de section croissante.

Selon un mode de réalisation, la vanne de contrôle de débit (1) est caractérisée en ce que les tubes de transport de fluide (3) à section géométriquement variable sont formés par un empilement de rondelles de sections différentes.

Selon un mode de réalisation, la vanne de contrôle de débit (1) est caractérisée en ce que l'empilement des rondelles présente une alternance de rondelles de petite(s) section(s) et de rondelles de grande(s) section(s).

Selon un mode de réalisation, la vanne de contrôle de débit (1) est caractérisée en ce que laquelle l'épaisseur d'une rondelle de petite section est égale à la distance entre deux sections de grand diamètre du tube de transport de fluide (3).

Selon un mode de réalisation, la vanne de contrôle de débit (1) est caractérisée en ce que l'épaisseur d'une rondelle de grande section est égale à la distance entre deux sections de petit diamètre du tube de transport de fluide (3).

Selon un mode de réalisation, la vanne de contrôle de débit (1) est caractérisée en ce que les tubes de transport de fluide (3) à section géométriquement variable sont formés par un empilement de disques perforés de trous de sections différentes.

Selon un mode de réalisation, la vanne de contrôle de débit (1) est caractérisée en ce que l'empilement des disques perforés présente une alternance de disques comportant des trous de petite(s) section(s) et disques comportant des trous de grande(s) section(s).

Selon un mode de réalisation, la vanne de contrôle de débit (1) est caractérisée en ce que l'épaisseur du disque comportant des trous de petite(s) section(s) est égale à la distance entre deux sections de petit diamètre du tube de transport de fluide (3).

Selon un mode de réalisation, la vanne de contrôle de débit (1) est caractérisée en ce que l'épaisseur du disque comportant des trous de grande(s) section(s) est égale à la distance entre deux sections de grand diamètre du tube de transport de fluide (3).

Selon un mode de réalisation, la vanne de contrôle de débit (1) est caractérisée en ce que les disques sont perforés de trous répartis selon des cercles concentriques, chaque cercle comportant des trous de section identique, les sections des trous croissant de l'intérieur vers l'extérieur de la vanne.

Selon un mode de réalisation, la vanne de contrôle de débit (1) est caractérisée en ce que les tubes de transport de fluide (3) à section géométriquement variable sont formés par un empilement de plaques carrées ou rectangulaires perforées de trous de sections différentes.

Selon un mode de réalisation, la vanne de contrôle de débit (1) est caractérisée en ce que l'empilement des plaques perforées présente une alternance de plaques comportant des trous de petite(s) section(s) et plaques comportant des trous de grande(s) section(s).

Selon un mode de réalisation, la vanne de contrôle de débit (1) est caractérisée en ce que l'épaisseur d'une plaque comportant des trous de petite(s) section(s) est égale à la distance entre deux sections de petit diamètre du tube de transport de fluide (3).

Selon un mode de réalisation, la vanne de contrôle de débit (1) est caractérisée en ce que l'épaisseur d'une plaque comportant des trous de grande(s) section(s) est égale à la distance entre deux sections de grand diamètre du tube de transport de fluide (3).

Selon un mode de réalisation, la vanne de contrôle de débit (1) est caractérisée en ce que les plaques sont perforées de trous répartis selon des lignes parallèles, chaque ligne comportant des tubes de section identique, les lignes étant disposées selon un ordre de section croissante.

## Brève description des Figures

La Figure 1 représente le comportement rhéologique d'une solution de polymère en milieu poreux (A) par comparaison en milieu bulk (B).

La Figure 2 représente de manière schématique une vanne de contrôle de débit de l'art antérieur où l'entrée du fluide se fait à travers les trous d'une cage et la sortie, perpendiculaire, se trouve au centre de la cage.

La Figure 3 représente de manière schématique un mode de réalisation d'une vanne de contrôle de débit selon l'invention.

La Figure 4 représente la perte de charge le long d'un tube à section constante.

La Figure 5 représente un mode de réalisation d'un tube de transport de fluide à section géométriquement variable.

# EP 3 084 118 B1

Les Figures 6a, 6b, 6c, 6d représentent la variation d'une section de petit diamètre vers une section de grand diamètre ou bien la variation d'une section de grand diamètre vers une section de petit diamètre respectivement sous forme de créneau, exponentielle, logarithmique ou hyperbolique.

La Figure 7 représente de manière schématique une vanne de contrôle de débit selon l'invention, munie d'un diaphragme comme moyen d'obturation.

La Figure 8 représente de manière schématique une répartition concentrique des tubes de transport de fluide.

La Figure 9 représente de manière schématique une répartition selon des lignes parallèles des tubes de transport de fluide.

La Figure 10 représente de manière schématique un empilement de rondelles alternant rondelles de petite(s) section(s) et de rondelles de grande(s) section(s).

La Figure 11 représente la dégradation d'une solution de polymère après passage dans une vanne de contrôle de débit de l'art antérieur en fonction de la perte de charge.

La Figure 12 représente la dégradation d'une solution de polymère et la perte de charge en fonction du débit après passage dans un tube de transport de fluide à section géométriquement variable selon l'invention (exemple 2a).

La Figure 13 représente la dégradation d'une solution de polymère et la perte de charge en fonction du débit ou en fonction de la distance entre deux contractions après passage dans un tube de transport de fluide à section géométriquement variable selon l'invention (exemple 2b).

La Figure 14 représente la dégradation d'une solution de polymère et la perte de charge en fonction du débit ou en fonction du diamètre Dc après passage dans un tube de transport de fluide à section géométriquement variable selon l'invention (exemple 2c).

La Figure 15 représente la dégradation d'une solution de polymère et la perte de charge en fonction du débit ou en fonction du diamètre De après passage dans un tube de transport de fluide à section géométriquement variable selon l'invention (exemple 2d).

La Figure 16 représente la dégradation d'une solution de polymère et la perte de charge en fonction du débit ou en fonction du nombre de contractions/élargissements après passage dans un tube de transport de fluide à section géométriquement variable selon l'invention (exemple 2e).

La Figure 17 représente la perte de charge en fonction du débit après passage dans un tube de transport de fluide à section géométriquement variable selon l'invention (exemple 3).

## Description détaillée de l'invention

L'invention est maintenant décrite plus en détail et de façon non limitative dans la description qui suit.

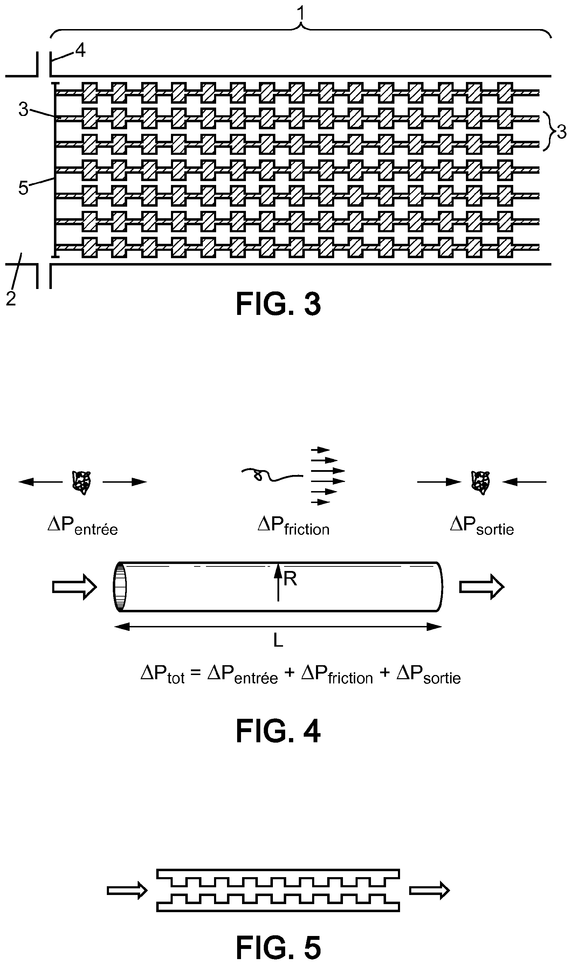

En faisant référence à la Figure 3, une vanne de contrôle de débit 1 selon l'invention est destinée à être raccordée à une conduite 2, ladite vanne comprenant :

- une pluralité de tubes de transport de fluide 3 à section géométriquement
  variable, disposés en parallèle les uns par rapport aux autres et présentant une alternance de sections de petit diamètre et de grand diamètre, le ratio d'une section de grand diamètre sur une section de petit diamètre étant de 2 à 10;
- un moyen de raccordement 4 à la conduite 2, situé à une extrémité des tubes de transport de fluide 3.

La conduite 2 comporte un tube unique. Elle est connectée, par une extrémité, à la pluralité de tubes de transport de fluide 3 par un moyen de raccordement 4, et est reliée, par son autre extrémité, à des moyens d'alimentation en fluide (non représentés). Généralement, ces moyens d'alimentation comportent un réservoir de fluide et un moyen de pompage. Plusieurs conduites 2 peuvent être reliées à un réservoir de fluide unique et à un moyen de pompage unique. Un moyen de pompage est adapté à faire circuler le fluide sous pression dans le tube unique de la conduite 2, puis à travers la vanne de contrôle de débit 1.

**EP 3 084 118 B1**

Ainsi, le fluide transporté passe à l'intérieur des tubes de transport de fluide 3.

La vanne selon l'invention peut être mise en oeuvre avec un fluide ayant une viscosité d'au moins celle de l'eau, en particulier comprise entre 0.5 cP et 100 cP.

L'invention vise en particulier le contrôle du débit de fluides utilisés en EOR, notamment les solutions aqueuses de polymère. Ces solutions comprennent un polymère hydrosoluble de forte masse moléculaire, notamment supérieure à $10^6$ Da (dalton ; 1 Da = 1 g/mol). La masse moléculaire du polymère peut être comprise entre $1,5.10^6$ Da et $50.10^6$ Da, en particulier entre $8.10^6$ Da et $30.10^6$ Da. En raison de sa disponibilité industrielle et son faible coût, la solution de polymère est le plus souvent une solution de polyacrylamide partiellement hydrolysé. Le polyacrylamide est peu sensible à la biodégradation, est moins cher que les biopolymères, et est très largement utilisé dans des applications EOR, mais il est particulièrement sensible à la rupture de ces chaînes.

L'invention peut également être mise en oeuvre avec d'autres types de fluides, notamment des fluides susceptibles de se dégrader, c'est-à-dire de voir leur viscosité diminuer, par exemple des émulsions. La vanne peut aussi être utilisée pour des fluides non élastiques, comme l'eau par exemple, afin de profiter des vitesses faibles dans l'équipement et donc de la plus grande résistance à l'usure par attrition.

La dégradation du fluide est calculée grâce à la formule suivante :

$$Deg\,(\%) = \frac{\eta_E - \eta_S}{\eta_E - \eta_{Flu}} \times 100$$

où $\eta_E$ et $\eta_S$ sont la viscosité du fluide, respectivement, en amont et en aval de la vanne de contrôle de débit 1, et $\eta_{Flu}$ est la viscosité du fluide sans polymère.

De façon avantageuse, la dégradation du fluide après passage dans la vanne est inférieure à 25%, de préférence inférieure à 10%, plus préférentiellement inférieure à 5%.

D'un point de vue économique, il est très intéressant de limiter la dégradation d'une solution de polymère afin d'utiliser une quantité moindre de polymère.

La vanne de contrôle de débit selon l'invention fonctionne selon le principe le suivant. Dans un tube de section constante (Figure 4), la perte de charge totale correspond à la somme de la perte de charge à l'entrée du tube (ΔP entrée), de la perte de charge par friction sur les parois des tubes (ΔP friction) et de la perte de charge à la sortie du tube (ΔP sortie). La perte de charge d'entrée (ΔP entrée) doit être faible de telle sorte que le polymère ne soit pas dégradé. On a ainsi:

$$\Delta P_{friction} \propto \frac{1}{R^4} \quad \text{et} \quad \dot{\gamma} \propto \frac{1}{R^3}$$

où R est le rayon du tube,
ce qui implique qu'on a tout intérêt à travailler avec des capillaires de petits diamètres (qui vont maximiser la perte de charge et minimiser le cisaillement). En général, si le diamètre du capillaire est supérieur à 1mm, la perte de charge par friction est faible. Il est alors nécessaire d'utiliser des capillaires très longs. Il n'est alors plus possible de réaliser une vanne compacte.

La vanne selon l'invention permet de générer une perte de charge additionnelle non dégradante sur des capillaires de diamètre supérieur à 1mm, grâce à la mise en place d'une alternance de contractions et d'élargissements au sein du capillaire qui va créer de la perte de charge à chaque entrée et sortie de rétrécissement. Cette approche est à priori paradoxale puisqu'un rétrécissement risque d'entraîner une dégradation mécanique du polymère. Cependant dans une vanne classique, les vitesses sont très élevées au passage d'un seul orifice. Avec cette invention, la mise en série d'un grand nombre de contractions/élargissements permet de maximiser la perte de charge. Il n'est alors plus nécessaire de travailler à des vitesses élevées. En conséquence, les taux de déformation qui s'exercent sur le polymère sont beaucoup plus faibles et donc beaucoup moins dégradants. La présente invention permet de maximiser la perte de charge d'entrée et de sortie dans le capillaire tout en évitant de dégrader la solution de polymère.

Au lieu d'utiliser des tubes de section constante le long de leur axe principal comme dans l'art antérieur, la vanne selon l'invention comprend une pluralité de tubes de transport de fluide de section géométriquement variable comme représenté sur la Figure 5.

Lesdits tubes sont disposés en parallèle les uns par rapport aux autres, par exemple comme représenté sur la Figure 3.

Au sens de la présente invention, le terme "en parallèle" signifie que les tubes de transport de fluide 3 sont disposés de telle sorte que le fluide issu de la conduite 2 peut (en l'absence d'obturation) se répartir dans la totalité des tubes de transports 3. Autrement dit, le débit total de fluide dans la conduite 2 est la somme des débits individuels de fluide dans les différents tubes de transport de fluide 3, chacun de ces débits individuels étant non nul (sauf obturation d'une partie des tubes de transport de fluide 3). Le terme "en parallèle" n'implique pas nécessairement que les axes des tubes de transports de fluide 3 sont parallèles les uns aux autres au sens géométrique, bien qu'une telle situation soit possible, et même préférable pour des raisons de simplicité de conception. Les tubes peuvent par exemple être enroulés en parallèles. Le nombre de tubes dans la vanne de contrôle dépend du débit souhaité dans la vanne, de la perte de charge souhaitée, de la dégradation maximale autorisée pour le fluide, et bien entendu de la géométrie et de la dimension des tubes. L'Exemple 4 décrit une façon de déterminer le nombre de tubes nécessaires pour fabriquer la vanne selon l'invention.

Typiquement, le nombre de tubes dans la vanne de contrôle est supérieur à 10, de façon préférée il est compris entre 1000 et 10000, de façon plus préférée il est compris entre 2500 et 10000, de façon encore plus préférée il est compris entre 5000 et 10000. En effet, la présence d'un grand nombre de tubes de transport de fluide 3 permet, pour une perte de charge donnée, de contrôler finement le débit tout en minimisant la dégradation du fluide et en limitant les dimensions de la vanne de contrôle de débit 2. Le nombre de tube nécessaire est fonction du débit maximal de la vanne.

Au sens de la présente invention, le terme "section" désigne la surface de l'espace interne d'un tube de transport de fluide 3 qui est perpendiculaire à l'axe principal du tube de transport de fluide 3, c'est-à-dire perpendiculaire à la direction moyenne de l'écoulement du fluide.

Au sens de la présente invention, le terme "tube à section géométriquement variable" signifie que la section du tube de transport de fluide 3 varie le long de l'axe principal du tube, et n'est donc pas constante. La variation de la section du tube est telle que celui-ci présente dans son espace interne une succession de contractions et d'élargissements.

Selon un mode de réalisation, le tube de transport de fluide 3 à section géométriquement variable présente une alternance de sections de petit(s) diamètre(s) et de grand(s) diamètre(s).

Au sens de la présente invention, l'expression "une alternance de sections de petit(s) diamètre(s) et de grand(s) diamètre(s)" signifie que dans un tube de transport de fluide 3, une première section de petit diamètre (rétrécissement) est suivi d'une première section de grand diamètre (élargissement), qui elle-même est suivie d'une seconde section de petit diamètre, étant entendu que ce diamètre n'est pas nécessairement identique à celui de la première section de petit diamètre, qui est elle-même suivie d'une seconde section de grand diamètre, étant entendu que ce diamètre n'est pas nécessairement identique à celui de la première section de grand diamètre, et ainsi de suite le long de l'axe dudit tube de transport de fluide 3. Pour des raisons de simplicité de conception, il est préférable que le tube présente une unique section de petit diamètre et une unique section de grand diamètre se succédant de manière alternée.

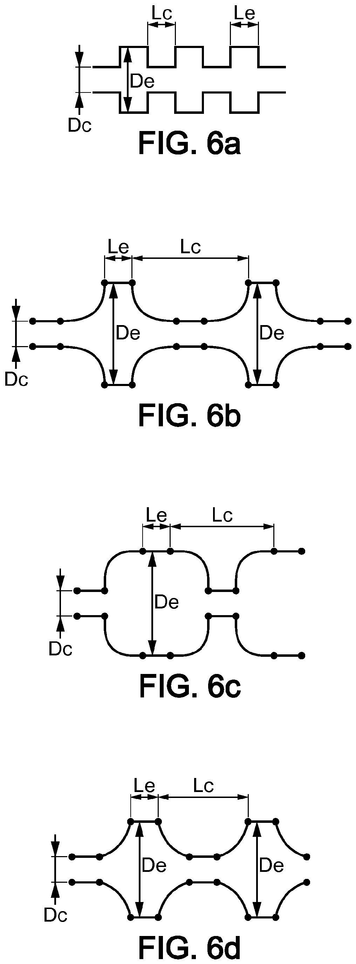

La variation d'une section de petit diamètre vers une section de grand diamètre ou bien la variation d'une section de grand diamètre vers une section de petit diamètre peut se présenter sous forme de créneau (Figure 6a), exponentielle (Figure 6b), logarithmique (Figure 6c) ou hyperbolique (Figure 6d). Pour des raisons de simplicité de conception, elle se présente de préférence sous forme de créneau.

De façon avantageuse, l'alternance de sections de petit(s) diamètre(s) et de grand(s) diamètre(s) dans un tube de transport de fluide 3 à section géométriquement variable permet de créer de la perte de charge en entrée et en sortie d'une section de petit(s) diamètre(s), et réciproquement en sortie et en entrée d'une section de grand(s) diamètre(s), tout en minimisant la dégradation du fluide.

On nomme Le, la distance entre deux sections de petit(s) diamètre(s), c'est-à-dire la distance le long de l'axe du tube entre le début et la fin d'une section de grand diamètre.

On nomme Le, la distance entre deux sections de grand(s) diamètre(s), c'est-à-dire la distance le long de l'axe du tube entre la fin d'une section de grand diamètre et le début de la section de grand diamètre suivante.

Selon un mode de réalisation particulier, l'alternance de sections de petit(s) diamètre(s) et de grand(s) diamètre(s) dans le tube de transport de fluide 3 est périodique.

Au sens de la présente invention, on entend par alternance périodique le fait que la distance Lc et la distance Le est toujours la même.

Selon un mode de réalisation particulier, la distance Le entre deux sections de petit(s) diamètre(s) est comprise dans la gamme allant de 0,5 mm à 20 mm, de préférence allant de 0,5 mm à 10 mm, encore plus de préférence allant de 0,5 mm à 2 mm.

Selon un mode de réalisation particulier, la distance Lc entre deux sections de grand(s) diamètre(s) est comprise dans la gamme allant de 0,5 mm à 20 mm de préférence allant de 0.5 mm à 10 mm, encore plus de préférence allant de 0,5 à 2 mm.

La perte de charge augmente lorsque le diamètre De de la grande section augmente, mais celui-ci a peu d'effet sur la dégradation du fluide.

Selon un mode de réalisation particulier, la section de petit diamètre a un diamètre Dc supérieur ou égal à 0,5 mm, de préférence compris entre 0,75 mm à 5 mm, encore plus préférentiellement compris entre 1 mm et 2 mm.

Selon un mode de réalisation particulier, la section de grand diamètre a un diamètre De inférieur ou égal à 5 mm, de préférence compris entre 0,75 mm à 4 mm, encore plus préférentiellement compris entre 2 mm et 3 mm.

Dans une variante particulière, les sections de petit diamètre le long du tube ont toutes le même diamètre Dc et les sections de grand diamètre le long du tube ont toutes le même diamètre De supérieur au diamètre Dc des sections de petit diamètre.

La perte de charge et la dégradation diminuent lorsque le diamètre de la petite section augmente, c'est-à-dire lorsque le ratio d'une section de grand diamètre sur une section de petit diamètre diminue.

En effet, la dégradation de la solution de polymère et la perte de charge diminuent avec le ratio d'une section de grand diamètre sur une section de petit diamètre. Un ratio environ égal à 2 est un bon compromis entre la perte de charge et la dégradation. Selon un mode de réalisation, le ratio de la distance Lc entre deux sections de grand(s) diamètre(s) sur le diamètre De de la section de grand(s) diamètre(s) est compris entre 0,1 et 30, de préférence compris entre 0,25 et 10, encore plus préférentiellement compris entre 0,5 et 5.

Selon un mode de réalisation, le ratio de la distance Le entre deux sections de petit(s) diamètre(s) sur le diamètre Dc de la section de petit(s) diamètre(s) est compris entre 0,1 et 30, de préférence compris entre 0,5 et 5, encore plus préférentiellement compris entre 1 et 5.

La perte de charge créée par la vanne selon l'invention varie linéairement avec le nombre n de contractions /élargissements que comprennent les tubes. Typiquement, ce nombre n est compris entre 50 et 1000 ; en particulier entre 500 et 1000, plus particulièrement entre 600 et 800..

En revanche, ce nombre n a peu d'influence sur la dégradation de la solution de polymère. En effet, la dégradation est la plus importante lors du passage dans les premières contractions.

La perte de charge créée par la vanne selon l'invention augmente avec la longueur des tubes.

Selon un mode de réalisation, la longueur des tubes de transport de fluide 3 est inférieure à 1500 mm, de préférence comprise entre 100 mm et 1000 mm, encore plus préférentiellement comprise entre 500 mm et 1000 mm.

De façon avantageuse, cette gamme de longueur permet l'obtention de la vanne de contrôle de débit 1 selon l'invention dans des dimensions compactes et donc particulièrement appropriée à une utilisation dans le domaine pétrolier, sur une plateforme ou sur un gisement pétrolier terrestre.

Selon un mode de réalisation, le débit de la solution de polymère hydrosoluble dans les tubes de transport de fluide 3 est inférieur à 500 ml/min, de préférence compris entre 100 ml/min et 300 ml/min, plus préférentiellement compris 150 ml/min et 250 ml/min.

Selon un mode de réalisation, le débit de la solution de polymère hydrosoluble dans la vanne de contrôle de débit 1 est inférieur à 300 $m^3$/h, de préférence compris entre 10 $m^3$/h et 250 $m^3$/h, plus préférentiellement compris 10 $m^3$/h et 200 $m^3$/h.

Selon un mode de réalisation, la perte de charge entre l'entrée et la sortie de la vanne de contrôle de débit est inférieure à 100 bar, de préférence comprise entre 15 bar et 75 bar, plus préférentiellement comprise entre 30 bar et 50 bar.

La vanne de contrôle de débit 1 peut être dépourvue de moyens d'obturation 5. Dans ce cas, le fluide circule toujours dans la totalité des tubes de transport de fluide 3, et la perte de charge générée ne peut pas être réglée par l'opérateur indépendamment du débit.

Les moyens de raccordement 4 permettent de raccorder la vanne de contrôle de débit 1 à la conduite 2. Par exemple les moyens de raccordement sont des brides de raccordement.

Toutefois, il est préféré de prévoir des moyens d'obturation 5 des tubes de transport de fluide 3, actionnables à distance (par exemple par commande hydraulique ou par commande électrique). De préférence ces moyens d'obturation 5 sont disposés à l'entrée ou, éventuellement, à la sortie des tubes de transport de fluide 3.

Selon un mode de réalisation, la vanne de contrôle de débit 1 comprend des moyens d'obturation 5 d'au moins une partie des tubes de transport de fluide 3. L'obturation de tout ou partie des tubes de transport de fluide 3 peut être sélective afin de réguler avec précision et pratiquement en continu la perte de charge et le débit par la vanne de contrôle de débit 1 selon l'invention.

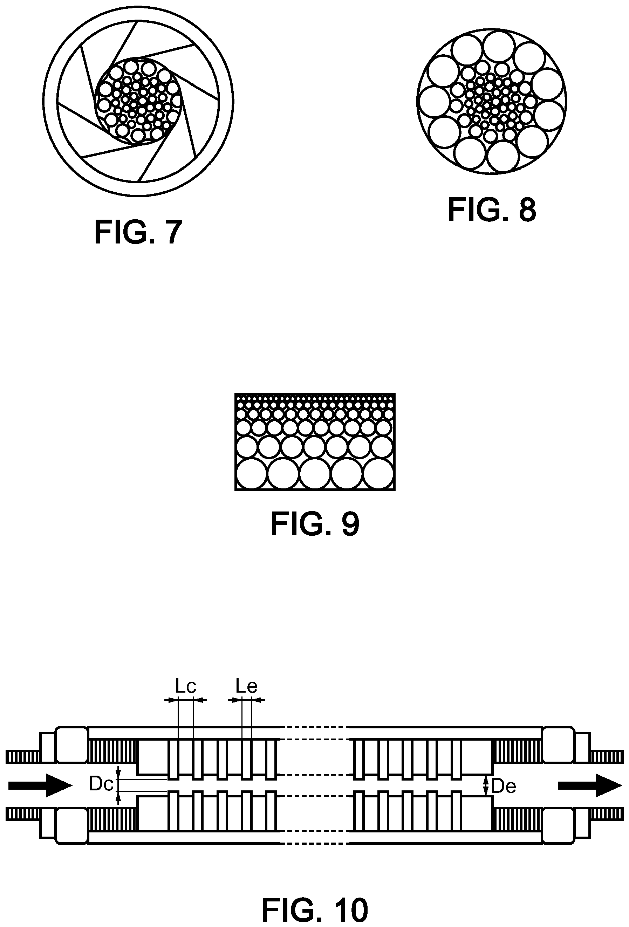

Selon un mode de réalisation, les moyens d'obturation 5 comprennent un diaphragme (Figure 7), des ailettes, une vanne à boisseau ou un piston.

Les tubes de transport de fluide 3 peuvent être de taille ou de forme identiques ou bien différentes.

Selon un mode de réalisation, ils sont disposés dans la vanne de contrôle de débit 1 par groupes de section essentiellement identique dans un plan perpendiculaire à l'axe principal de la vanne. Leur répartition peut, par exemple, être réalisée selon des cercles concentriques, chaque cercle comportant des tubes de section identique, les sections des tubes croissant de l'intérieur vers l'extérieur de la vanne (Figure 8). Ils peuvent aussi être répartis selon des lignes parallèles, chaque ligne comportant des tubes de section identique dans un plan perpendiculaire à l'axe principal de la vanne, les lignes étant disposées selon un ordre de section croissante (Figure 9). Pour débit donné, on peut diminuer la perte de charge créée par la vanne en rajoutant des tubes de section plus importante qui sont nécessairement moins dégradants pour le fluide.

Avantageusement, il est possible de contrôler la perte de charge à un débit donné de fluide transporté dans la vanne de contrôle de débit 1 en modifiant la disposition des tubes de transport de fluide 3 en fonction de leur section. Par conséquent, modifier la disposition permet de facilement adapter la vanne de contrôle de débit 1 selon l'invention en fonction des conditions opératoires, en particulier de la viscosité du fluide transporté, du débit, et/ou de la perte de charge.

La pluralité de tubes de transport de fluide 3 à section géométriquement variable peut être avantageusement formée en empilant soit des rondelles de sections différentes, soit des disques perforés de trous.

Selon un mode de réalisation, les tubes de transport de fluide 3 à section géométriquement variable sont formés par un empilement de rondelles de sections différentes (Figure 10).

Chaque rondelle présente en son centre un trou. Il n'y a pas de restriction sur la forme du trou, mais pour des raisons de simplicité de conception, le trou est de préférence de forme cylindrique.

Au sens de la présente invention, la section de la rondelle correspond à la surface de l'espace du trou qui est perpendiculaire à l'axe de la rondelle. Un empilement de rondelles de sections différentes permet ainsi de former un tube de section géométriquement variable.

Par référence à la Figure 10, l'empilement de rondelles présente en particulier une alternance de rondelles de petite(s) section(s) 6 et de rondelles de grande(s) section(s) 7.

Le diamètre du trou de la rondelle de petite section correspond au diamètre Dc de la section de petit diamètre du tube.

Le diamètre du trou de la rondelle de grande section correspond au diamètre De de la section de grand diamètre.

L'épaisseur d'une rondelle de petite section correspond à la distance Lc entre deux sections de grand diamètre du tube de transport de fluide 3. L'épaisseur d'une rondelle de grande section correspond à la distance Le entre deux sections de petit diamètre du tube de transport de fluide 3.

Selon un mode de réalisation particulier, les rondelles de sections différentes peuvent être en acier inoxydable ou non, en aluminium, en cuivre, de préférence en acier inoxydable.

De façon avantageuse, l'empilement de rondelles de sections différentes est rapide et facile à mettre en oeuvre, la vanne de contrôle de débit 1 est donc facile à mettre en oeuvre. De plus, il est aisé de changer une desdites rondelles afin d'adapter la vanne de contrôle de débit 1 aux conditions opératoires, en particulier de la viscosité de la solution de polymère, du débit, et/ou de la perte de charge.

Selon un autre mode de réalisation, les tubes de transport de fluide 3 à section géométriquement variable sont formés par un empilement de disques perforés de trous de sections différentes, ou bien par un empilement de plaques carrées ou rectangulaires perforées de trous de sections différentes.

A l'instar des rondelles, il n'y a pas de restriction sur la forme des trous, mais pour des raisons de simplicité de conception, les trous sont de préférence de forme cylindrique.

Au sens de la présente invention, la section d'un trou de disque ou de plaque correspond à la surface de l'espace du trou qui est perpendiculaire à l'axe du disque.

Un disque ou une plaque peut comprendre des trous de sections identiques ou des trous de sections différentes.

Selon un mode de réalisation, les trous sont disposés dans le disque ou la plaque par groupes de section essentiellement identique dans un plan perpendiculaire à l'axe principal du disque ou de la plaque. Dans le cas du disque, leur répartition peut, par exemple, être réalisée selon des cercles concentriques, chaque cercle comportant des sections identiques, les sections des trous croissant de l'intérieur vers l'extérieur de la vanne. Dans le cas de la plaque, les trous peuvent être répartis selon des lignes parallèles, chaque ligne comportant des trous de section identique dans un plan perpendiculaire à l'axe principal de la plaque, les lignes étant disposées selon un ordre de section croissante.

L'empilement de disques ou plaques perforés de trous dont les axes coïncident entre eux permet de former une pluralité de tubes disposés en parallèles les uns par rapport aux autres. L'alternance de trous présentant des sections différentes d'un disque ou d'une plaque à l'autre permet de former une pluralité de tubes de section géométriquement variable.

En particulier, l'empilement des disques/plaques perforés présente une alternance de disques/plaques comportant des trous de petite(s) section(s) et disques/plaques comportant des trous de grande(s) section(s).

Le diamètre d'un trou de petite section correspond au diamètre Dc de la section de petit diamètre d'un tube.

Le diamètre d'un trou de grande section correspond au diamètre De de la section de grand diamètre d'un tube.

A l'instar des rondelles, les disques/plaques perforés de trous de sections différentes peuvent être en acier inoxydable ou non, en aluminium, en cuivre, de préférence en acier inoxydable.

De façon avantageuse, l'empilement de disques/plaques perforés de trous de sections différentes est rapide et facile à mettre en oeuvre, la vanne de contrôle de débit lest donc facile à mettre en oeuvre. De plus, il est aisé de changer un disque perforé afin d'adapter la vanne de contrôle de débit 1 aux conditions opératoires, en particulier de la viscosité de la solution de polymère, du débit, et/ou de la perte de charge.

## Exemples

Exemple 1 : Dégradation d'une solution de polymère après passage dans une vanne de contrôle de débit de l'art antérieur (cage percée de trous comme représentée sur la Figure 2).

Polymère : polyacrylamide de haut et bas poids moléculaire 3630S de SNF Floerger, poids moléculaire moyen estimé à 18 MDa

Concentration du polymère : 800 ppm.

Plage de débit : 10 - 250 m$^3$/h.

La viscosité en aval de la vanne de contrôle de débit est mesurée en fonction du débit et de la perte de charge ΔP (différence entre la pression en entrée de la vanne de contrôle de débit et la pression en sortie de la vanne de contrôle de débit).

La dégradation du polymère est calculée selon la formule suivante :

$$Deg\,(\%) = \frac{\eta_E - \eta_S}{\eta_E - \eta_{Flu}} \times 100$$

où $\eta_E$ et $\eta_S$ sont la viscosité du fluide, respectivement, en amont et en aval de la vanne de contrôle de débit et $\eta_{Flu}$ est la viscosité de l'eau.

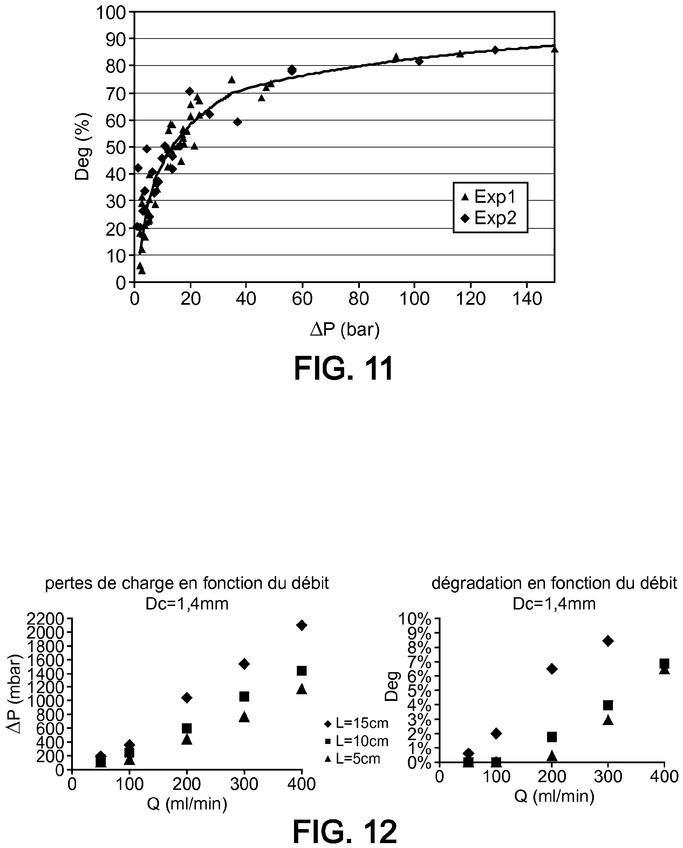

L'expérience a été réalisée deux fois et les résultats sont représentés sur la Figure 11.

Comme le montrent les deux expériences, quels que soient le débit et l'ouverture de la vanne de contrôle de débit, la dégradation est uniquement fonction de la perte de charge ΔP.

Exemple 2 : Dégradation d'une solution de polymère et perte de charge après passage dans un tube de transport de fluide à section géométriquement variable selon l'invention.

Dans les exemples suivants, le tube de transport de fluide à section géométriquement variable consiste en une alternance de rondelles de petite section et de grande section. Ces rondelles présentent un diamètre externe de 1,5 cm et sont percées d'un trou circulaire en leur centre dont le diamètre est compris entre entre 1 mm et 3 mm. Elles sont alignées dans un tube de section interne 1,5 cm. L'étanchéité entre les rondelles est assurée par leur contact.

Exemple 2a : Influence de la longueur du tube et du débit.

Dans cet Exemple; le diamètre du trou des rondelles de petite section, Dc, est de 1,4 mm; et le diamètre du trou des rondelles de grande section est de 2 mm. La longueur des rondelles est de 5 mm (Lc=Le).

La longueur du tube est de 5 cm, 10 cm ou 15 cm. La solution de polymère est la même que celle de l'Exemple 1.

On mesure la perte de charge ΔP (différence entre la pression en entrée de tube et la pression en sortie de tube) et la viscosité du fluide en entrée et en sortie du tube en fonction du débit dans le tube (50 - 400 m$^3$/h).

On calcule la dégradation de la solution de polymère (Deg) comme dans l'Exemple 1.

Les résultats sont représentés sur la Figure 12. Les courbes montrent que la perte de charge augmente avec la longueur du tube. Cependant, quelle que soit la longueur du tube, la dégradation reste inférieure à 8% pour un débit inférieur à 300cc/min.

Exemple 2b : Influence de la distance entre deux contractions et du débit.

Dans cet exemple; le diamètre du trou des rondelles de petite section est de 1,4 mm; et le diamètre du trou des rondelles de grande section est de 2 mm.

La longueur du tube est de 10 cm. La distance entre deux élargissements Le est de 5 mm.

La distance Le entre deux contractions (sections de petit diamètre) est de 5 mm, 10 mm ou 20 mm.

La solution de polymère est identique à celle de l'Exemple 2a.

On mesure la perte de charge ΔP (différence entre la pression en entrée de tube et la pression en sortie de tube) en fonction de la distance Le pour un débit de 100 ml/min, 200 ml/min ou 300 ml/min.

On mesure la viscosité du fluide en entrée et en sortie du tube en fonction du débit dans le tube (de 50 ml/min à 400 ml/min) pour chaque Le, et on calcule la dégradation de la solution de polymère (Deg) comme dans l'Exemple 1.

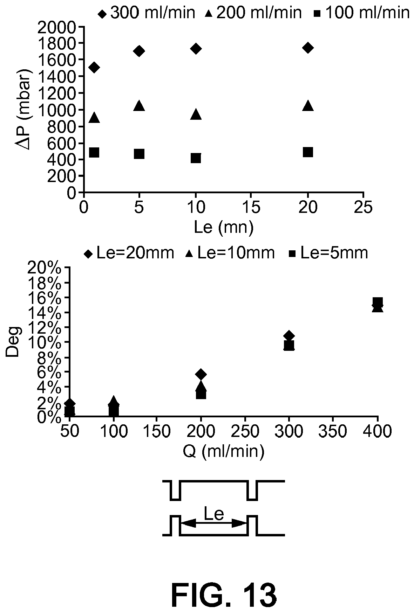

Les résultats sont représentés sur la Figure 13. Les courbes montrent que la dégradation de la solution de polymère dépend peu de la distance entre deux contractions (Le) pourvue que celle-ci soit suffisante. En effet, la perte de charge semble augmenter lorsque Le augmente. Il semble nécessaire d'avoir une longueur minimale Le.

Exemple 2c : Influence de la section de petit diamètre et du débit.

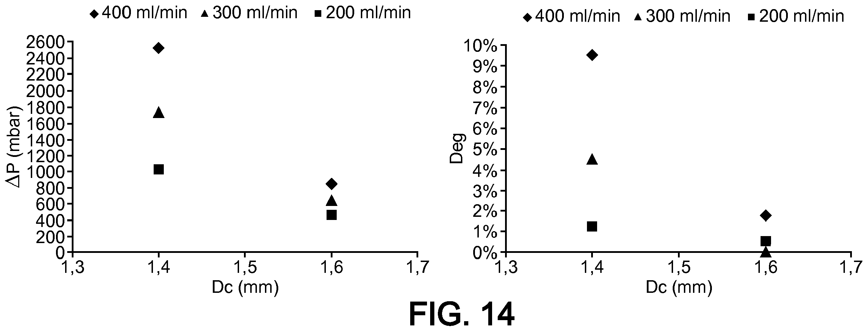

Dans cet exemple; le diamètre du trou des rondelles de grande section est de 2 mm et l'on fait varier le diamètre du trou des rondelles de petite section (1,4 mm ou bien 1,6 mm).
La longueur du tube est de 30 cm. Le=Lc=5 mm
La solution de polymère est identique à celle de l'Exemple 2a.
On mesure la perte de charge ∆P (différence entre la pression en entrée de tube et la pression en sortie de tube) en fonction de Dc pour un débit de 200 ml/min, 300 ml/min ou 400 ml/min.
On mesure la viscosité du fluide en entrée et en sortie du tube en fonction de Dc pour pour un débit de 200 ml/min, 300 ml/min ou 400 ml/min. et on calcule la dégradation de la solution de polymère (Deg) comme dans l'Exemple 1.
Les résultats sont représentés sur la Figure 14. Les courbes montrent que la perte de charge et la dégradation diminuent lorsque le rapport du diamètre de grande section sur le diamètre de petite section augmente.

Exemple 2d : Influence de la section de grand diamètre et du débit.

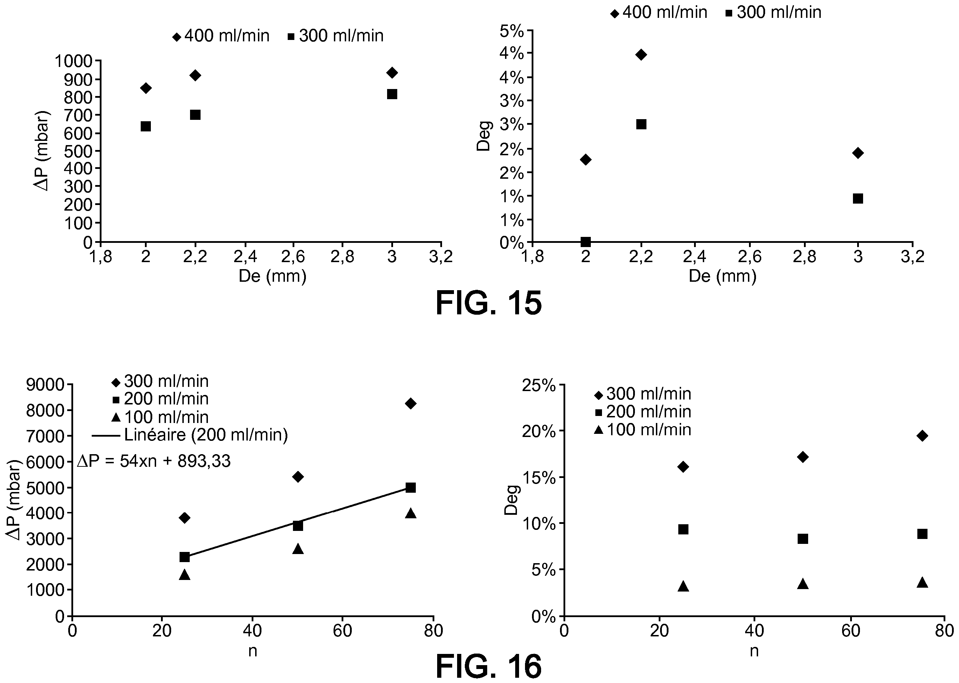

Dans cet exemple; le diamètre du trou des rondelles de petite section est de 1 mm et l'on fait varier le diamètre De du trou des rondelles de grande section (2 mm, 2,2 mm ou bien 3 mm).
La longueur du tube est de 10 cm. Le=Lc=5mm.
La solution de polymère est identique à celle de l'Exemple 2a.
On mesure la perte de charge ∆P (différence entre la pression en entrée de tube et la pression en sortie de tube) en fonction de De pour un débit de 300 ml/min ou 400 ml/min.
On mesure la viscosité du fluide en entrée et en sortie du tube en fonction de De pour pour un débit de 300 ml/min ou 400 ml/min et on calcule la dégradation de la solution de polymère (Deg) comme dans l'Exemple 1.
Les résultats sont représentés sur la Figure 15. Les courbes montrent que la perte de charge augmente légèrement avec le diamètre De. En revanche, le diamètre De a peu d'effet sur la dégradation.

Exemple 2e : Influence du nombre de contractions/élargissements n et du débit

Dans cet exemple; le diamètre du trou des rondelles de petite section est de 1 mm et le diamètre du trou des rondelles de grande section est de 2 mm.
La longueur du tube est proportionnelle au nombre de contractions/élargissements n. Le=Lc=lmm.
La solution de polymère est identique à celle de l'Exemple 2a.
On mesure la perte de charge ∆P (différence entre la pression en entrée de tube et la pression en sortie de tube) en fonction de n pour un débit de 100 ml/min, 200 ml/min ou 300 ml/min.
On mesure la viscosité du fluide en entrée et en sortie du tube en fonction de n pour pour un débit de 100 ml/min, 200 ml/min ou 300 ml/min et on calcule la dégradation de la solution de polymère (Deg) comme dans l'Exemple 1.
Les résultats sont représentés sur la Figure 16. Les courbes montrent que la perte de charge augmente linéairement avec le nombre de contractions/élargissement, n, (∆P = 54*n + 893,33). En revanche, le nombre de contractions/élargissement, n, a peu d'effet sur la dégradation.

Exemple 3 : Comparaison des pertes de charge par friction calculées avec celles mesurées expérimentalement sur un tube comprenant 13 contractions en série.

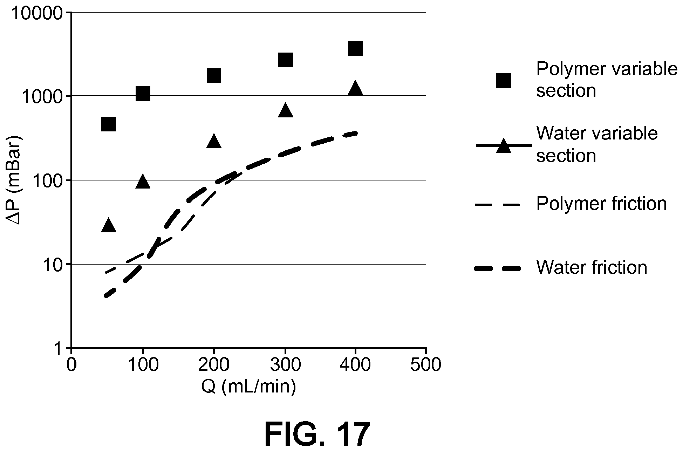

Dans cet exemple, le tube comprend une alternance de 13 contractions et élargissements, avec Lc = Le = 1 mm, et Dc = 1 mm, De = 2 mm.
La perte de charge calculée pour un système équivalent sans alternance de contractions et d'élargissements est égale à la somme de la perte de charge d'un tube long de 6,5 mm et de section interne de 1 mm et de la perte de charge d'un tube long de 6,5 mm et de section interne de 2 mm.
On compare cette perte de charge calculée avec la perte de charge mesurée expérimentalement en fonction du débit.
Voir la Figure 17. Les pertes de charge calculées pour un système sans alternance sont représentées par les courbes pointillées (trait fin pour de l'eau, trait épais pour une solution de polymère). Les valeurs de pressions mesurées sont représentées par les triangles pour l'eau et les carrés pleins pour la solution de polymère.
On peut voir sur la Figure 17 que la perte de charge d'un tube selon l'invention qui comprend une alternance de contractions et d'élargissement est multipliée pour une solution de polymère d'un facteur 100 à bas débit, et d'un facteur 10 à haut débit par rapport à la perte de charge calculée pour un système équivalent mais qui ne comprend pas d'alternance contractions/élargissements.

Le tube selon l'invention permet donc générer de la perte de charge sur des capillaires de diamètre supérieur à 1 mm. La maximisation de la perte de charge grâce à la succession d'effets de bouts permet aussi de maximiser la perte de charge d'un fluide non élastique tel que l'eau.

Exemple 4 : Fabrication d'une vanne de contrôle de débit selon l'invention.

Débit souhaité à dans la vanne = 100 m³/h.

Perte de charge souhaité après passage de la vanne = 40 bars.

On forme un tube en empilant des rondelles percées d'un trou circulaire de section de 1 mm en alternance avec des rondelles percées d'un trou de section de 2 mm.

La distance Le entre deux élargissements est de 1 mm.

La distance Lc entre deux contractions est de 1 mm.

D'après l'Exemple 2e, le débit maximal acceptable est 200 ml/min si l'on veut obtenir une dégradation de 10 % au plus. De plus, on a montré que pour un débit de 200 ml/min, ΔP = 54*n + 893,33, avec n = nombre de contractions /élargissements.

Donc, dans ces conditions, n = 724 si l'on veut obtenir une perte de charge de 40 bars.

La longueur du tube est donc de 724*2 = 1,45 m.

Le débit dans chaque tube est de 20 ml/min.

Le débit souhaité à dans la vanne est de 100 m³/h.

Le débit dans chaque tube est de 200/1000/1000/60 = 3600 m³/h.

Pour ce faire, la vanne selon l'invention est donc constituée de :

$$\text{N tubes} = Q_{\text{vanne de contrôle de débit}}(\text{m}^3/\text{s}) \, / \, Q_{\text{tube}} \, (\text{m}^3/\text{s}) = 100/3600$$

$$= 8333 \text{ tubes en parallèles.}$$

En considérant un empilement de compact (compacité = 0,9) de tubes de section interne de 2 mm, ayant une épaisseur de paroi de 2 mm, on obtient un diamètre total de 23 cm pour le faisceau de tubes.

Si l'on veut obtenir une perte de charge plus faible avec un même débit de 100 m³/h, il faut rajouter des tubes de plus gros diamètre qui seront nécessairement moins dégradants pour la solution de polymère. On peut envisager un diamètre total du faisceau de tubes permettant le contrôle de la perte de charge à 30 cm environ.

Le dimensionnement de la vanne avec un diamètre D = 30cm, et une longueur L = 155cm semble acceptable.

On peut disposer les tubes de sections variables sous forme de fagot, comme représenté sur la Figure 8. Les tubes de diamètre supérieur en périphérie du fagot permettent de diminuer la perte de charge créée par la vanne.

Le fagot de tube peut être fabriqué en empilant des disques perforés dont l'épaisseur correspond à la longueur des rondelles mentionnées ci-dessus

**Revendications**

**1.** Vanne de contrôle de débit (1) destinée à être raccordée à une conduite (2), ladite vanne comprenant :

- une pluralité de tubes de transport de fluide (3) à section géométriquement variable, disposés en parallèle les uns par rapport aux autres;
- un moyen de raccordement (4) à la conduite, situé à une extrémité des tubes de transport de fluide (3),

**caractérisée en ce que** les tubes de transport de fluide (3) à section géométriquement variable présentent une alternance de sections de petit diamètre et de grand diamètre ;
et dans laquelle le ratio d'une section de grand diamètre sur une section de petit diamètre est de 2 à 10, en particulier est environ égal à 2.

**2.** Vanne de contrôle de débit (1) selon la revendication 1, dans laquelle les petit(s) diamètre(s) sont supérieurs ou égaux à 0,5 mm.

3. Vanne de contrôle de débit (1) selon la revendication 1 ou la revendication 2, dans laquelle les grand(s) diamètre(s) sont inférieurs ou égaux à 5 mm.

4. Vanne de contrôle de débit (1) selon l'une quelconque des revendications 1 à 3, dans laquelle la distance entre deux sections de petit(s) diamètre(s) est comprise dans la gamme allant de 0,5 mm à 20 mm.

5. Vanne de contrôle de débit (1) selon l'une quelconque des revendications 1 à 4, dans laquelle la distance entre deux sections de grand(s) diamètre(s) est comprise dans la gamme allant de 0,5 mm à 20 mm.

6. Vanne de contrôle de débit (1) selon l'une quelconque des revendications 1 à 5, dans laquelle la variation d'une section de petit diamètre vers une section de grand diamètre se présente sous forme de créneau ou bien sous forme exponentielle, logarithmique ou hyperbolique et/ou
la variation d'une section de grand diamètre vers une section de petit diamètre se présente sous forme de créneau ou bien sous forme exponentielle, logarithmique ou hyperbolique.

7. Vanne de contrôle de débit (1) selon l'une quelconque des revendications 1 à 6, comprenant des moyens d'obturation (5) d'au moins une partie des tubes de transport de fluide (3) permettant l'obturation sélective de tout ou partie des tubes de transport de fluide (3).

8. Vanne de contrôle de débit (1) selon la revendication 7, dans laquelle les moyens d'obturation (5) comprennent un diaphragme, des ailettes, une vanne à boisseau ou un piston.

9. Vanne de contrôle de débit (1) selon l'une quelconque des revendications 1 à 8, dans laquelle les tubes de transport de fluide (3) ne présentent pas tous des sections identiques.

10. Vanne de contrôle de débit (1) selon l'une quelconque des revendications 1 à 9, dans laquelle les tubes de transport de fluide (3) sont disposés par groupes de section essentiellement identique.

11. Vanne de contrôle de débit (1) selon la revendication 10, dans laquelle les différents groupes de tubes de transport de fluide (3) sont répartis selon des cercles concentriques, chaque cercle comportant des tubes de section identique, les sections des tubes croissant de l'intérieur vers l'extérieur de la vanne.

12. Vanne de contrôle de débit (1) selon la revendication 10, dans laquelle les différents groupes de tubes de transport de fluide (3) sont répartis selon des lignes parallèles, chaque ligne comportant des tubes de section identique, les lignes étant disposées selon un ordre de section croissante.

13. Vanne de contrôle de débit (1) selon l'une quelconque des revendications 1 à 12, dans laquelle les tubes de transport de fluide (3) à section géométriquement variable sont formés par un empilement de rondelles de sections différentes.

14. Vanne de contrôle de débit (1) selon l'une quelconque des revendications 1 à 12, dans laquelle les tubes de transport de fluide (3) à section géométriquement variable sont formés par un empilement de disques perforés de trous de sections différentes.

15. Vanne de contrôle de débit (1) selon l'une quelconque des revendications 1 à 12, dans laquelle les tubes de transport de fluide (3) à section géométriquement variable sont formés par un empilement de plaques carrées ou rectangulaires perforées de trous de sections différentes.


**Patentansprüche**

1. Durchflussregelventil (1), das bestimmt ist zur Verbindung mit einer Leitung (2), wobei das Ventil umfasst:

   • eine Vielzahl von Flüssigkeitstransportrohren (3) mit geometrisch variablem Querschnitt, die zueinander parallel angeordnet sind;
   • ein Verbindungsmittel (4) mit der Leitung, welches an einem Ende der Flüssigkeitstransportrohre (3) angeordnet ist,

   **dadurch gekennzeichnet, dass** die Flüssigkeitstransportrohre (3) mit geometrisch variablem Querschnitt abwechselnd Abschnitte mit kleinem Durchmesser und mit großem Durchmesser aufweisen;
und in dem das Verhältnis eines Abschnitts mit großem Durchmesser zu einem Abschnitt mit kleinem Durchmesser zwischen 2 und 10, insbesondere etwa gleich 2 ist.

2. Durchflussregelventil (1) nach Anspruch 1, bei dem die kleinen Durchmesser größer oder gleich 0,5 mm sind.

3. Durchflussregelventil (1) nach Anspruch 1 oder Anspruch 2, bei dem die großen Durchmesser kleiner oder gleich 5 mm sind.

4. Durchflussregelventil (1) nach einem der Ansprüche 1 bis 3, bei dem der Abstand zwischen zwei Abschnitten mit kleinem Durchmesser in dem Bereich zwischen 0,5 mm und 20 mm liegt.

5. Durchflussregelventil (1) nach einem der Ansprüche 1 bis 4, bei dem der Abstand zwischen zwei Abschnitten mit großem Durchmesser in dem Bereich von 0,5 mm bis 20 mm liegt.

6. Durchflussregelventil (1) nach einem der Ansprüche 1 bis 5, bei dem die Veränderung eines Abschnitts mit kleinen Durchmesser zu einem Abschnitt mit großen Durchmesser sich in der Form einer Zinne oder auch unter einer exponentiellen, logarithmischen oder hyperbolischen Form darstellt und/oder
die Veränderung von einem Abschnitt mit großem Durchmesser zu einem Abschnitt mit kleinem Durchmesser sich in der Form einer Zinne oder auch unter einer exponentiellen, logarithmischen oder hyperbolischen Form darstellt.

7. Durchflussregelventil (1) nach einem der Ansprüche 1 bis 6, mit Verschlussmitteln (5) für zumindest einen Teil der Flüssigkeitstransportrohre (3), die den selektiven Verschluss aller oder eines Teiles der Flüssigkeitstransportrohre (3) erlauben.

8. Durchflussregelventil (1) nach Anspruch 7, bei dem die Verschlussmittel (5) eine Membran, Flügelchen, ein Kegelventil oder einen Kolben umfassen.

9. Durchflussregelventil (1) nach einem der Ansprüche 1 bis 8, bei dem die Flüssigkeitstransportrohre (3) nicht alle identische Querschnitte aufweisen.

10. Durchflussregelventil (1) nach einem der Ansprüche 1 bis 9, bei dem die Flüssigkeitstransportrohre (3) in Gruppen mit im Wesentlichen gleichem Querschnitt angeordnet sind.

11. Durchflussregelventil (1) nach Anspruch 10, bei dem die verschiedenen Gruppen von Flüssigkeitstransportrohren (3) in konzentrischen Kreisen angeordnet sind, wobei jeder Kreis Rohre mit identischen Durchmesser umfasst, und die Durchmesser der Rohre vom Inneren zum Äußeren des Ventils anwachsen.

12. Durchflussregelventil (1) nach Anspruch 10, bei dem die unterschiedlichen Gruppen der Flüssigkeitstransportrohre (3) in parallelen Linien angeordnet sind, wobei jede Linie Rohre mit identischen Durchmesser umfasst, und die Linien gemäß einer Ordnung des zunehmenden Querschnitts angeordnet sind.

13. Durchflussregelventil (1) nach einem der Ansprüche 1 bis 12, bei dem die Flüssigkeitstransportrohre (3) mit geometrisch variablem Querschnitt durch einen Stapel von Unterlegscheiben mit unterschiedlichem Durchmesser gebildet sind.

14. Durchflussregelventil (1) nach einem der Ansprüche 1 bis 12, bei dem die Flüssigkeitstransportrohre (3) mit geometrisch variablem Querschnitt durch einen Stapel von Scheiben gebildet sind, die mit Löchern mit unterschiedlichem Durchmesser durchlöchert sind.

15. Durchflussregelventil (1) nach einem der Ansprüche 1 bis 12, bei dem die Transportrohre (3) mit geometrisch variablem Querschnitt durch einen Stapel von quadratischen oder rechteckigen Platten gebildet sind, die mit Löchern mit unterschiedlichem Durchmesser durchlöchert sind.

**Claims**

1. A flow control valve (1) which is designed to be connected to a duct (2), said valve comprising:

- a plurality of fluid transport pipes (3) with a geometrically variable cross-section, disposed in parallel relative to one another;
- a means (4) for connection to the duct, situated at one end of the fluid transport pipes (3),

**characterized in that** the fluid transport pipes (3) with a geometrically variable cross-section have alternation of cross-section with small diameter and large diameter,
and the ratio between the large diameter over the small diameter is 2 to 10, notably equal to about 2.

2. The flow control valve (1) as claimed in claim 1, wherein the small diameter(s) are equal to or more than 0.5 mm.

3. The flow control valve (1) as claimed in claim 1 or claim 2, wherein the large diameter(s) are equal to or lower than 5 mm.

4. The flow control valve (1) as claimed in any one of claims 1 to 3, wherein the distance between two cross-sections with small diameters is in the range between 0.5 mm and 20 mm.

5. The flow control valve (1) as claimed in any one of claims 1 to 4, wherein the distance between two cross-sections with large diameters is in the range between 0.5 mm and 20 mm.

6. The flow control valve (1) as claimed in any one of claims 1 to 5, wherein the variation from a cross-section with a small diameter to a cross-section with a large diameter is in the form of a crenellation, or in hyperbolic, logarithmic or exponential form and/or
the variation from a cross-section with a large diameter to a cross-section with a small diameter is in the form of a crenellation, or in hyperbolic, logarithmic or exponential form.

7. The flow control valve (1) as claimed in any one of claims 1 to 6, comprising means (5) for shutting at least some of the fluid transport pipes (3) enabling selective shutting of some or all of the fluid transport pipes (3).

8. The flow control valve (1) as claimed in claim 7, wherein the shutting means (5) comprise a diaphragm, fins, a multiple-way valve, or a piston.

9. The flow control valve (1) as claimed in any one of claims 1 to 8, wherein the fluid transport pipes (3) do not all have identical cross-sections.

10. The flow control valve (1) as claimed in any one of claims 1 to 9, wherein the fluid transport pipes (3) are disposed in groups with a substantially identical cross-section.

11. The flow control valve (1) as claimed in claim 10, wherein the different groups of fluid transport pipes (3) are distributed according to concentric circles, each circle comprising pipes with an identical cross-section, with the cross-sections of the pipes increasing from the interior towards the exterior of the valve.

12. The flow control valve (1) as claimed in claim 10, wherein the different groups of fluid transport pipes (3) are distributed according to parallel lines, each line comprising pipes with an identical cross-section, the lines being disposed according to an order with an increasing cross-section.

13. The flow control valve (1) as claimed in any one of claims 1 to 1612 wherein the fluid transport pipes (3) with a geometrically variable cross-section are formed by a stack of washers with different cross-sections.

14. The flow control valve (1) as claimed in any one of claims 1 to 12, wherein the fluid transport pipes (3) with a geometrically variable cross-section are formed by a stack of perforated discs with holes with different cross-sections.

15. The flow control valve (1) as claimed in any one of claims 1 to 12, wherein the fluid transport pipes (3) with a geometrically variable cross-section are formed by a stack of square or rectangular plates perforated with holes with different cross-sections.

FIG. 1

FIG. 2

**FIG. 3**

$\Delta P_{tot} = \Delta P_{entrée} + \Delta P_{friction} + \Delta P_{sortie}$

**FIG. 4**

**FIG. 5**

FIG. 6a

FIG. 6b

FIG. 6c

FIG. 6d

**FIG. 7**

**FIG. 8**

**FIG. 9**

**FIG. 10**

FIG. 11

FIG. 12

FIG. 13

FIG. 14

FIG. 15

FIG. 16

FIG. 17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4276904 A
- DE 2810118
- WO 2012001671 A2